# EUROPEAN PATENT APPLICATION

(11) **EP 2 706 713 A1**
(43) Date of publication of application: **12.03.2014**
(21) Application number: 12290297.6
(22) Date of filing: 10.09.2012
(51) Int. Cl.: H04L 27/26, H04L 1/00

(54) **Multi-carrier symbols with varying coding rates**

(71) Applicant: Alcatel Lucent, 75007 Paris (FR)
(72) Inventor: Wild, THorsten, 70435 Stuttgart (DE); Schaich, Frank, 70459 Stuttgart (DE)
(74) Representative: DREISS Patentanwälte PartG mbB

(57) **Abstract**

The invention relates to an apparatus (100) for providing a multi-carrier modulated signal (S), wherein said apparatus (100) is configured to generate a plurality of multi-carrier symbols (MC1, MC2, MC3), wherein said apparatus (100) is further configured to generate a first group (sg1) of subsequent multi-carrier symbols (s1, s2, s3), wherein data associated with said first group (sg1) of subsequent multi-carrier symbols (s1, s2, s3) is coded by using a first code rate, and to generate a second group (sg2) of subsequent multi-carrier symbols (s4, s5, s6, s7), wherein data associated with said second group (sg2) of subsequent multi-carrier symbols (s4, s5, s6, s7) is coded by using a second code rate which is different from said first code rate.

## Description

### Field of the invention

The present invention relates to an apparatus for providing a multi-carrier modulated signal, wherein said apparatus is configured to generate a plurality of multi-carrier symbols.

The present invention further relates to a method for providing a multi-carrier modulated signal, wherein a plurality of multi-carrier symbols are generated.

### Background

Multi-carrier modulated signals are per se known and are for instance used within cellular communication systems according to the LTE (Long Term Evolution) standard, which are e.g. described in 3GPP TS 36.211 version 8.7.0. A downlink resource grid as used by the LTE system is e.g. depicted by figure 6.2.2-1 of 3GPP TS 36.211 V. 8.5.0. As the LTE system employs OFDM (Orthogonal Frequency Division Multiplexing) technique, the multi-carrier symbols employed by the LTE system are also referred to as "OFDM symbols". According to the LTE standard, an OFDM symbol comprises a plurality of frequency subcarriers, and the duration of a single OFDM symbol may e.g. be defined as a fraction of a slot time also defined by 3GPP TS 36.211 V8.7.0.

It is an object of the present invention to provide an improved apparatus and method for providing a multi-carrier modulated signal which enables an increased reliability of signal transmission and an increased flexibility regarding signal transmission.

### Summary

Regarding the above-mentioned apparatus, according to the present invention, this object is achieved by said apparatus being configured to generate a first group of subsequent multi-carrier symbols, wherein data associated with said first group of subsequent multi-carrier symbols is coded by using a first code rate, and to generate a second group of subsequent multi-carrier symbols, wherein data associated with said second group of subsequent multi-carrier symbols is coded by using a second code rate which is different from said first code rate.

Advantageously, employing different code rates for coding data associated with the first and second group of multi-carrier symbols yields an increased flexibility regarding data transmission and the reliability of data transmission. For instance, such multi-carrier symbols which carry data of a comparatively high importance or priority may be coded by using a first code rate which is comparatively low, i.e. which offers comparatively much redundancy, to enable a reliable transmission and reception of the so-coded data. On the other hand, other multi-carrier symbols of said second group may be used to transmit data which has been coded by using a second code rate which is e.g. higher than the first code rate thus comprising less redundancy and less reliability as compared to the first code rate.

I.e., by applying the principle according to the embodiments, it is possible to flexibly control a degree of protection of coded data by means of appropriately choosing a respective code rate on a multi-carrier symbol basis. For example, those multi-carrier symbols that are transmitted at the beginning of a sequence of multi-carrier symbols may be processed with increased degree of protection by choosing a correspondingly low code rate, while subsequent multi-carrier symbols may be processed with a lower degree of protection by choosing a correspondingly higher code rate. Thus, detection errors related to multi-carrier symbols that are transmitted at the beginning of a sequence may be prevented and the overall detection process may so be improved.

Generally, in the context of the present invention, the term "data associated with a multi-carrier symbol" denotes an amount of data which is carried (e.g., for the purpose of transmission) by the time/frequency resources defined by said multi-carrier symbol. The step of coding employing the different code rates according to the embodiments may also be followed by further steps of data manipulation such as further coding steps, modulation, segmentation, and the like, prior to mapping the respective data so coded to the time/frequency resources defined by said multi-carrier symbol.

To summarize, the inventive principle advantageously enables to employ non-uniform code rates throughout several multi-carrier symbols thus offering a further degree of flexibility regarding the reliability of data transmission in multi-carrier modulation based communication systems.

As such, the inventive principle may well be applied to LTE systems, wherein said first group of subsequent multi-carrier symbols comprises a first number of OFDM symbols as defined by the LTE standard, and wherein said second group of subsequent multi-carrier symbols according to the embodiments comprises a second number of OFDM symbols.

Of course, the inventive principle may also be applied to other communication systems than those according to the LTE standard. Particularly, the inventive principle may be applied to any multi-carrier communication system, which comprises transmission of multi-carrier modulated signals. I.e., the inventive principle may also be applied to e.g. filter bank based multi carrier (FBMC) systems, and the like.

According to the principle of the embodiments, said first group of subsequent multi-carrier symbols and/or said second group of multi-carrier symbols may also comprise a single multi-carrier symbol. I.e., the principle of the embodiments of a non-uniform code rate associated with data of respective multi-carrier symbols may also be applied on a per multi-carrier symbol basis.

The first and second groups in the sense of the present invention may be considered as a sequence of one or more subsequent multi-carrier symbols, which are preferably adjacent according a time dimension. I.e., said first group or said second group of subsequent multi-carrier symbols may comprise one or more multi-carrier symbols.

By employing the principle of the embodiments, a block of multi-carrier symbols which comprises a plurality of multi-carrier symbols that may be arranged in said first and second and/or further groups of multi-carrier symbols may comprise a non-uniform code rate along a time coordinate, i.e. over the different multi-carrier symbols comprised in said block.

The principle of the embodiments related to the non-uniform code rate for different multi-carrier symbols / symbol groups may be applied for downlink data transmissions, i.e. from a base station to a terminal of a cellular communications network, or for uplink data transmissions, i.e. from a terminal to a base station, or for peer-to-peer transmissions between various base stations or between various terminals or other entities capable of multi-carrier modulation based transmission techniques.

According to a preferred embodiment, said first group and/or said second group comprises only one single multi-carrier symbol, which has already been explained above.

According to a further preferred embodiment, said first group and said second group are adjacent along a time dimension, i.e. there are no further multi-carrier symbols or groups of multi-carrier symbols between the first group and the second group. This advantageously enables to provide said first and second groups of multi-carrier symbols with respective different first and second codes rates in a timely subsequent fashion, i.e. without further multi-carrier symbols transmitted in between the two groups.

According to a further embodiment, said first group and/or said second group comprises a plurality of multi-carrier symbols. It is also possible that said first group comprises a single multi-carrier symbol and that the second group comprises a plurality of multi-carrier symbols. Also, it is possible that the first group comprises a plurality of multi-carrier symbols and that the second group comprises a single multi-carrier symbol. Further permutations regarding the number of multi-carrier symbols in the first and second groups are also possible.

In any case, the principle of the non-uniform code rate for the different groups of multi-carrier symbols yields the above-mentioned advantages.

According to a further embodiment, said apparatus is configured to generate a plurality of multi-carrier symbols using an increasing or decreasing code rate along a time dimension. Thus, for example, a first multi-carrier symbol comprises a first code rate, and a second multi-carrier symbol, which follows after the first multi-carrier symbol comprises a second code rate which is different from the first code rate. Moreover, a third multi-carrier symbol following after the second multi-carrier symbol may comprise a third code rate which is again different from the second code rate, and so on. For instance, subsequent multi-carrier symbols or subsequent groups of multi-carrier symbols (or the data carried thereby, respectively) may each be assigned with different code rates, wherein the code rate may e.g. be monotonously increasing or weakly monotonously increasing or monotonously decreasing or weakly monotonously decreasing along a time coordinate, i.e. along the sequence number of a specific multi-carrier symbol within a sequence of multi-carrier symbols.

That is, data associated with different multi-carrier symbols according to the present embodiment is coded by using different code rates each, wherein said code rate e.g. depends on the number of the multi-carrier symbol in the sequence of the multi-carrier symbols over time. The multi-carrier symbols comprising the increasing or decreasing code rate according to the present embodiment are not required to be adjacent to each other, i.e. the above-defined rule for the code rate varying over time may also be applied to non-adjacent multi-carrier symbols.

Further variations of the code rate applied to data associated with various multi-carrier symbols are also possible, especially variants where the code rate is increasing and decreasing in an alternate fashion and the like.

According to a further embodiment, at least one multi-carrier symbol comprises a plurality of subcarriers, wherein said plurality of subcarriers is preferably contiguous along a frequency dimension. This means that there are no gaps along the frequency dimension between two neighbouring subcarriers which are about the size of the bandwidth of a subcarrier.

According to a further embodiment, said apparatus is further configured to generate at least one multi-carrier symbol, wherein data associated with a first group of, preferably adjacent, subcarriers is coded by using a third code rate, and wherein data associated with a second group of, preferably adjacent, subcarriers is coded by using a fourth code rate, wherein said fourth code rate is different from said third code rate. According to the present embodiment, a non-uniform code rate may also be applied to data on a per-subcarrier basis so that different subcarriers of a single multi-carrier symbol comprise data which has been coded with respective different code rates.

Thus, data which is carried on said different first and second groups of subcarriers of one single multi-carrier symbol may be coded with respective different code rates, whereby a further degree of freedom regarding the transmission reliability is attained.

According to a further preferred embodiment, the data coded by using the different code rates is user data. I.e., the present invention may preferably be applied for transmitting user data by means of the plurality of multi-carrier symbols. Thus, for example, a block of user data which comprises a plurality of multi-carrier symbols may be transmitted, wherein different multi-carrier symbols of said block of data are associated with different code rates each. I.e., data comprised within different multi-carrier symbols of said block of user data may have been coded by using different code rates. This advantageously enables to define a specific priority and transmission reliability for different multi-carrier symbols or subcarriers thereof associated e.g. to a single user.

Alternatively or in addition, the inventive principle may also be applied to multi-carrier symbols that are employed for transmitting control information.

According to a further embodiment, said apparatus is configured to generate a first multi-carrier symbol and a subsequent second multi-carrier symbol such that the first and second multi-carrier symbols partially overlap along a time coordinate. This advantageously enables to increase a packing density of subsequent multi-carrier symbols along a time coordinate and thus to increase the effective data rate for data transmissions according to the principle of the embodiments.

According to a preferred embodiment, said apparatus is further configured to generate said first and second multi-carrier symbols such that an overlapping range in which said first and second multi-carrier symbols overlap is about 50% of a symbol duration of said first and second multi-carrier symbols, whereby a particularly efficient cascading of subsequent multi-carrier symbols is attained.

According to a particularly preferred embodiment, a block of multi-carrier symbols to be transmitted comprises a first multi-carrier symbol and a subsequent second multi-carrier symbol and further subsequent multi-carrier symbols, wherein the second multi-carrier symbol is overlapping by about a symbol duration of 50% with respect to the multi-carrier symbol at the beginning of the block thus leaving the first half of the first multi-carrier symbol without overlap which enables a particularly efficient and reliable decoding at a receiver. The second and the further subsequent multi-carrier symbols are overlapping each other by about 50% with respect to the symbol duration thus attaining a very high packing of subsequent multi-carrier symbols along the time coordinate.

The decoding of so cascaded multi-carrier symbols may be facilitated by choosing different code rates for the various multi-carrier symbols in accordance with the preceding embodiments.

A further solution to the object of the present invention is given by a method for providing a multi-carrier modulated signal according to claim 11. The method proposes that a first group of subsequent multi-carrier symbols is generated, wherein data associated with said first group of subsequent multi-carrier symbols is coded by using a first code rate, and that a second group of subsequent multi-carrier symbols is generated, wherein data associated with said second group of subsequent multi-carrier symbols is coded by using a second code rate which is different from said first code rate.

According to a preferred embodiment, said data is user data.

According to further preferred embodiment, said first multi-carrier symbol and a subsequent second multi-carrier symbol are generated such that the first and second multi-carrier symbols partially overlap along a time coordinate.

According to a further embodiment, a plurality of multi-carrier symbols are generated using an increasing or decreasing code rate along a time dimension.

Generally, the process of coding using different first and second code rates according to the embodiments may be referred to as applying an "inner code", because according to a further embodiment, there is the option of additionally using an outer code, which e.g. covers a whole frame of multi-carrier symbols, or the data associated therewith, respectively. The outer code may e.g. cover a specific number of multi-carrier symbols that carry data that has been coded using the inner code and different code rates according to the embodiments. Additionally using an outer code supports iterative receiver processing.

A further solution to the object of the invention is given by an apparatus for decoding a multi-carrier modulated signal, preferably a multi-carrier modulated signal as obtained from an apparatus according to one of the claims 1 to 10, wherein said apparatus for decoding is configured to decode a first group of subsequent multi-carrier symbols, wherein data associated with said first group of subsequent multi-carrier symbols is coded by using a first code rate, and to decode a second group of subsequent multi-carrier symbols, wherein data associated with said second group of subsequent multi-carrier symbols is coded by using a second code rate which is different from said first code rate. Such apparatus may e.g. be implemented in a receiver.

### Brief description of the figures

Further features, aspects and advantages of the present invention are given in the following detailed description with reference to the drawings in which:
- Figure 1: schematically depicts a plurality of multi-carrier symbols according to an embodiment,
- Figure 2: schematically depicts a block diagram of an apparatus according to an embodiment,
- Figure 3a, 3b, 3c: depict multi-carrier symbols obtained according to further embodiments,
- Figure 4: depicts temporally overlapping multi-carrier symbols according to a further embodiment, and
- Figure 5: depicts a simplified flow chart according to a method according to an embodiment.

### Description of the embodiments

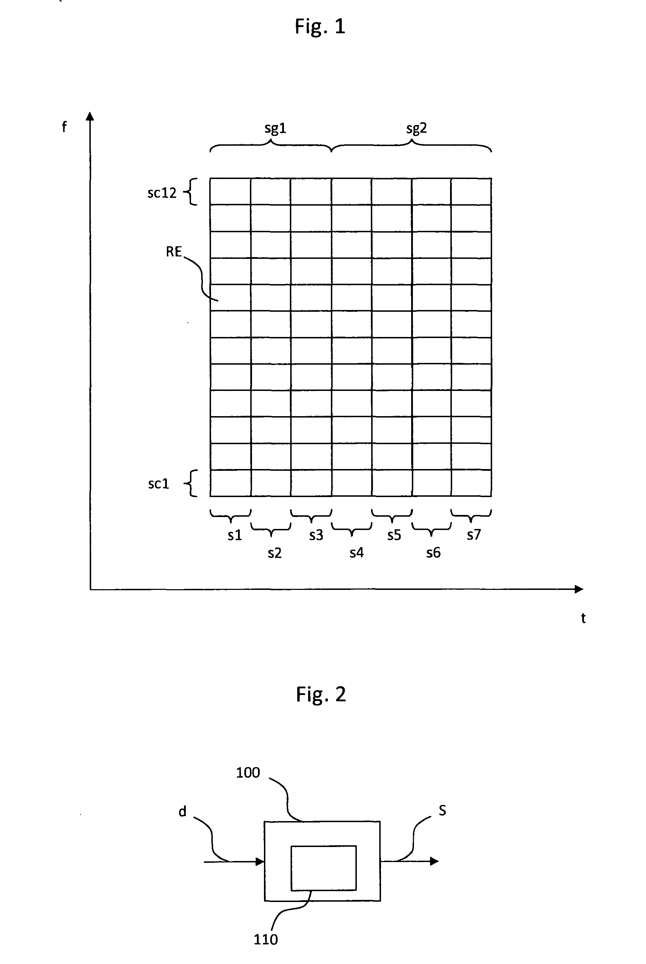

Figure 1 schematically depicts a time/frequency resource diagram, wherein a time axis t is represented by a horizontal axis and a frequency axis is represented by the vertical axis f. A first multi-carrier symbol is indicated along the time axis by the reference sign s1 and comprises a plurality of, presently 12, frequency subcarriers sc1, .., sc12. A smallest resource unit of a communication system that may employ the multi-carrier symbols depicted by figure 1 is called a resource element RE, which is denoted by a specific multi-carrier symbol s1 and a specific subcarrier of said multi-carrier symbol s1. In total, the multi-carrier symbol indicated at the symbol time s1 of figure 1 comprises a symbol duration corresponding to the length of the bracket s1 and a total of 12 subcarriers sc1, .., sc12.

Subsequent multi-carrier symbols s2, s3, s4, s5, s6, s7 are also depicted by figure 1.

The first three multi-carrier symbols s1, s2, s3 form a first group sg1 of multi-carrier symbols, whereas the fourth to seventh multi-carrier symbols s4, s5, s6, s7 form a second group sg2 of multi-carrier symbols according to the present embodiment.

The multi-carrier symbols as depicted by figure 1 may e.g. be generated by a corresponding apparatus 100 which is depicted by the block diagram of figure 2. The apparatus 100 comprises processing means 110 that may e.g. comprise a digital signal processor (DSP), a micro controller or similar hardware, software, firmware and/or a combination thereof. For instance, the device 110 may also comprise an ASIC (Application Specific Integrated Circuit) or a Field Programmable Gate Array (FPGA) or any device that may be configured in a per se known manner to operate according to the embodiments of the present invention. The apparatus 100 receives at its input a data signal d and generates a multi-carrier modulated signal S, which is output at its output.

For example, the input signal d may comprise a sequence of data bits which may be coded using a per se known code having a specific code rate. According to an embodiment, the data bits of input signal d may e.g. represent Internet Protocol (IP) packets or the like.

As an example for coding techniques that may be applied to the input signal, the following codes are listed: block codes (e.g. Reed-Solomon-codes, LDPC (Low-Density-Parity-Check) codes), convolutional codes, parallel/serial concatenated codes.

After coding, the so-obtained coded bits may be further manipulated in a per se known manner, i.e. by performing a step of modulation. For instance, one or more coded bits may be modulated by BPSK (Binary Phase Shift Keying), QAM (Quadrature Amplitude Modulation) or some other modulation scheme, whereby one single bit or a group of coded bits is associated with a respective complex number as defined in a constellation diagram according to the employed modulation scheme. One or more of the so-obtained modulated symbols or complex numbers, respectively, may be assigned in a per se known manner to one or more resource elements RE as depicted by figure 1.

I.e., after coding with the specific code rate, the so coded data may be assigned to various resource elements RE of the multi-carrier symbols depicted by figure 1 in a step of resource mapping. The step of resource mapping in effect determines, which resource elements RE of the multi-carrier symbols receive respective modulated data.

Optionally, after coding and/or modulation, further processing steps such as e.g. layer mapping and/or precoding and the like may be performed.

According to the present invention, the apparatus 100 (figure 2) is configured to generate a first group sg1 (figure 1) of subsequent multi-carrier symbols s1, s2, s3, wherein data associated with said first group sg1 of subsequent multi-carrier symbols is coded by using a first code rate. Moreover, the apparatus 100 is configured to generate a second group sg2 of subsequent multi-carrier symbols s4, s5, s6, s7, wherein data associated with said second group sg2 of subsequent multi-carrier symbols is coded by using a second code rate which is different from said first code rate.

That is, the input data d received at the input of the apparatus 100 according to figure 2 may be partitioned in different portions of input data, wherein a first portion of input data may be coded with a first code rate, and a second portion of input data may be coded with a second code rate being different from the first code rate. The so-obtained coded data may e.g. be modulated as mentioned above and may then be assigned to different resource elements or multi-carrier symbols s1, .., s7 as depicted by figure 1.

Thus, according to the present embodiment, it is possible to provide different multi-carrier symbols s1, .., s7 carrying data which has been coded by using different code rates. This principle of non-uniform code rate for transmission of a plurality of multi-carrier symbols advantageously enables to prioritise the data associated with the respective multi-carrier symbols. For instance, the multi-carrier symbols of the first group sg1 (figure 1) may comprise (modulated) data which has been coded by using a first, comparatively low code rate, which offers a particularly high reliability of transmission and reception at a receiver side. In contrast, the multi-carrier symbols of the second group sg2 may comprise data which has been coded using the second code rate, which might be higher than the first code rate thus offering less redundancy than the data that has been coded using the first code rate. As such, by using the multi-carrier symbols of the second group sg2, more user bits per multi-carrier symbol may be transmitted, however, at a lower reliability of reception as compared to the first group sg1.

Generally, the process of coding using different first and second code rates according to the embodiments may be referred to as applying an "inner code", because according to an embodiment, there is the option of additionally using an outer code, which e.g. covers a whole frame of multi-carrier symbols. The outer code may e.g. cover a specific number of multi-carrier symbols that carry data that has been coded using the inner code and different code rates according to the embodiments. Using an outer code - in addition to the inner code according to the embodiments - supports iterative receiver processing.

In other words, optionally, there is an outer code spanning over a larger range of multi-carrier symbols. The redundancy of the outer code allows to iterate several times with the inner codes, in case a first parsing through the multi-carrier symbols does not result in error-free reception. I.e., the additional (optional) application of the outer code further improves a detection process at a receiver that processes the multi-carrier symbols as provided in accordance with the embodiments.

For the sake of clarity, the further explanations focus on the inner code according to the embodiments.

According to a preferred embodiment, the data d coded with different first and second code rates and distributed to the various multi-carrier symbols by a step of resource mapping is user data. According to another embodiment, control information may also be processed according to the embodiments.

However, it is particularly preferred to employ the non-uniform code rate according to the embodiments for processing blocks or groups of multi-carrier symbols which carry user data in order to enable different transmission priorities or different transmission reliabilities for said user data.

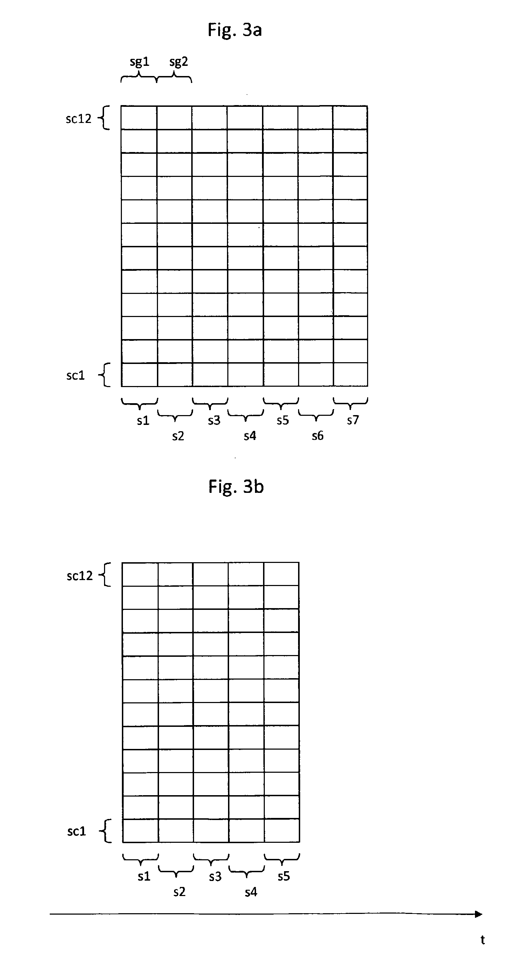

Figure 3a depicts a further embodiment, wherein the data associated with the first multi-carrier symbol s1 has been coded using a first code rate, and wherein the data associated with the second multi-carrier symbol s2 has been coded with a second code rate that is different from said first code rate. In this embodiment, the first and second group sg1, sg2, respectively, comprise a single multi-carrier symbol s1, s2 each.

The further multi-carrier symbols s3, s4, s5, s6, s7 may be processed by using either the first or the second code rate or at least one further code rate different from the first and second code rates. Alternatively, the further multi-carrier symbols s3, .., s7 may also be processed by conventional techniques, i.e. employing a single, constant code rate.

Figure 3b depicts a further embodiment, wherein the various multi-carrier symbols s1, s2, s3, s4, s5 comprise data that has been processed by using an increasing or decreasing code rate along the time dimension. I.e., the data of each multi-carrier symbol s2 has been processed with an individual code rate being different from a code rate that has been applied to data of its neighbouring multi-carrier symbols s1, s3. Thus, it is advantageously possible to implement a so-called code ramp, whereby a transmission reliability may be controlled in a very sophisticated manner.

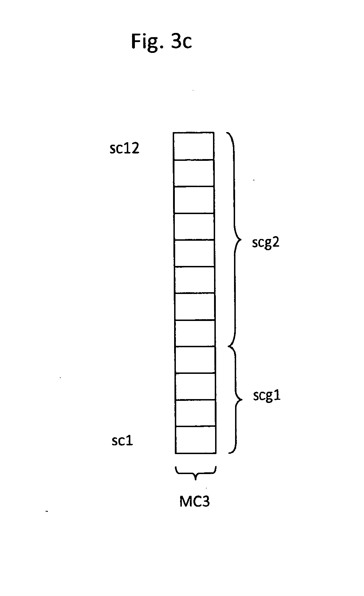

According to a further embodiment, said apparatus 100 (figure 2) is further configured to generate at least one multi-carrier symbol MC3 (Figure 3c), wherein data associated with a first group scg1 of, preferably adjacent, subcarriers is coded by using a third code rate, and wherein data associated with a second group scg2 of, preferably adjacent, subcarriers is coded by using a fourth code rate, wherein said fourth code rate is different from said third code rate. According to the present embodiment, a non-uniform code rate may also be applied to data on a per-subcarrier basis so that different subcarriers of a single multi-carrier symbol MC3 comprise data which has been coded with respective different code rates.

Although the various embodiments according to figure 1, 3a, 3b, 3c comprise multi-carrier symbols having twelve subcarriers, the inventive principle may be applied to any multi-carrier modulated symbol, wherein a single multi-carrier symbol at least comprises two subcarriers, which are preferably adjacent.

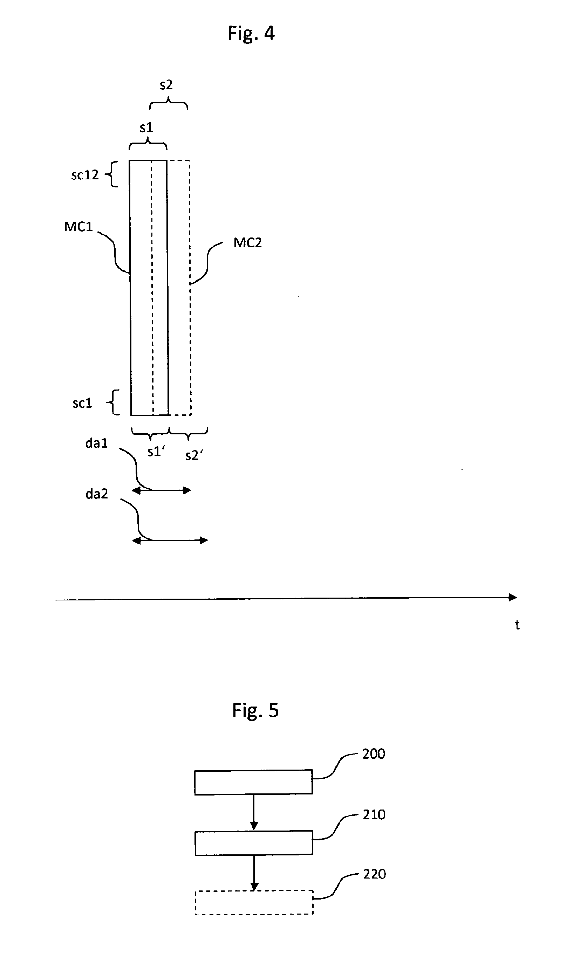

Figure 4 depicts a further embodiment, wherein a first multi-carrier symbol MC1 is transmitted during a first symbol time s1', and wherein a second, "subsequent" multi-carrier symbol MC2 is transmitted in an overlapping fashion with respect to the first multi-carrier symbol MC1. More precisely, the second multi-carrier symbol MC2 is not transmitted during a subsequent transmission time interval s2', which follows the first transmission time interval s1', but it is transmitted after about 50% of the symbol duration s1' of the first multi-carrier symbol MC1, which yields the overlapping symbol configuration as depicted by figure 4.

Thus advantageously, the overall time required for transmitting both multi-carrier symbols MC1, MC2 is reduced, cf. the double arrow da1 of figure 4, with respect to the nominal transmission time of two strictly subsequent multi-carrier symbols, cf. the double arrow da2 of figure 4.

Since the first multi-carrier symbol MC1 according to figure 4 comprises a non-overlapping portion, i.e. the first half of the multi-carrier symbol duration, a detection at a receiver is particularly simple in that no overlapping effects are experienced within the first half of the symbol duration s1' of the first multi-carrier symbol MC1. Only the second half of the first multi-carrier symbol MC1 already overlaps with the second multi-carrier symbol MC2, which yields a higher temporal packing of the respective subsequent multi-carrier symbols MC1, MC2'.

The principle according to the embodiments, which proposes to employ different code rates for data associated with different multi-carrier symbols may advantageously be combined with the idea of overlapping or at least partially overlapping subsequent multi-carrier symbols MC1, MC2, whereby the reception reliability may be increased. For example, the first multi-carrier symbol MC1 according to the embodiment of figure 4 may be transmitted by using a comparatively high code rate because a detection comprises low complexity in view of a non-overlapping portion of the first multi-carrier symbol MC1. The further multi-carrier symbol MC2 may be assigned with data that has been coded by using a second code rate, which is comparatively low, in order to increase its transmission and reception reliability, which is particularly useful in view of the second multi-carrier symbol MC2 overlapping with the first multi-carrier symbol MC1 and further subsequent multi-carrier symbols, which are not depicted by figure 4 for the sake of clarity.

According to a further embodiment, it is also possible to use different code rates and/or combinations of decreasing and/or increasing code rates along a sequence of multi-carrier symbols such that e.g. from a first to n-th multi-carrier symbol of said sequence a code rate is increasing, and such that e.g. from the (n+1)-th multi-carrier symbol to a last multi-carrier symbol of said sequence the code rate is decreasing, or vice versa. This further helps to reduce error propagation, e.g. in the context of interference cancellation. Optionally, at least some of the respective multi-carrier symbols of said sequence may also be generated to overlap each other in analogy to the embodiment according to Fig. 4.

The techniques according to the various embodiments explained above may also be combined with each other.

Figure 5 depicts a flow chart of a method according to the embodiments. In a first step 200, a first group sg1 of subsequent multi-carrier symbols s1, s2, s3 (figure 1) is generated, wherein data associated with said first group sg1 of subsequent multi-carrier symbols is coded by using a first code rate.

In the subsequent step 210 (figure 5), a second group sg2 (figure 1) of subsequent multi-carrier symbols s4, s5, s6, s7 is generated, wherein data associated with said second group sg2 of subsequent multi-carrier symbols is coded using a second code rate which is different from the first code rate.

Optionally, after generation of said groups sg1, sg2, a step of transmitting 220 the respective multi-carrier symbols may follow.

Further steps that may optionally be performed in the context of transmitting the multi-carrier modulated signal S (figure 1) obtained according to the embodiments are e.g. segmentation/concatenation, forward error correction, rate matching, modulation of coded data, layer mapping, precoding, and the like.

The apparatus 100 depicted by figure 2 may e.g. be comprised in a base station of a cellular communications network or in a terminal thereof.

According to yet another embodiment, upon receiving the input data d (figure 2) at the input of apparatus 100, a step of segmentation and/or concatenation of input data may be performed to obtain segmented input data. The segmentation and/or concatenation is per se known and has the effect of
1. Matching the code blocks to the actual size of the allocations carrying the code blocks.
2. Improving coding performance by aggregation of small data (i.e., IP) packets to a single code block.

The segmented input data may after that be objected to a forward error correction (FEC), to obtain FEC processed data. The FEC may e.g. be applied on a per symbol basis, i.e. such portions of the segmented input data are selected for FEC processing which will be associated with a specific one or a plurality of subsequent of the multi-carrier symbols according to the embodiments. E.g., the principle of the different code rate for data associated with different multi-carrier symbols may be applied in the course of FEC processing thus defining different coding rates for the FEC. Particularly, a FEC processing block of the apparatus 100 or its processing means 110 may be provided with a control signal defining a number of user bits (i.e., data bits of said input data d) to be coded per block (i.e., per multi-carrier symbol or number of subsequent multi-carrier symbols having the same code rate).

Optionally, after the FEC processing, a step of rate matching may be performed, and after that modulation and/or precoding and the like may be performed.

A further solution to the object of the invention is given by an apparatus for decoding a multi-carrier modulated signal, preferably a multi-carrier modulated signal as obtained from an apparatus according to one of the claims 1 to 10, wherein said apparatus for decoding is configured to decode a first group of subsequent multi-carrier symbols, wherein data associated with said first group of subsequent multi-carrier symbols is coded by using a first code rate, and to decode a second group of subsequent multi-carrier symbols, wherein data associated with said second group of subsequent multi-carrier symbols is coded by using a second code rate which is different from said first code rate. Such apparatus may e.g. be implemented in a receiver.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Apparatus (100) for providing a multi-carrier modulated signal (S), wherein said apparatus (100) is configured to generate a plurality of multi-carrier symbols, wherein said apparatus (100) is further configured to generate a first group (sg1) of subsequent multi-carrier symbols (s1, s2, s3), wherein data associated with said first group (sg1) of subsequent multi-carrier symbols (s1, s2, s3) is coded by using a first code rate, and to generate a second group (sg2) of subsequent multi-carrier symbols (s4, s5, s6, s7), wherein data associated with said second group (sg2) of subsequent multi-carrier symbols (s4, s5, s6, s7) is coded by using a second code rate which is different from said first code rate.

2. Apparatus (100) according to claim 1, wherein said first group (sg1) and/or said second group (sg2) comprises one single multi-carrier symbol.

3. Apparatus (100) according to claim 1 or 2, wherein said first group (sg1) and said second group (sg2) are adjacent along a time dimension.

4. Apparatus (100) according to one of the preceding claims, wherein said first group (sg1) and/or said second group (sg2) comprise a plurality of multi-carrier symbols.

5. Apparatus (100) according to one of the preceding claims, wherein said apparatus (100) is configured to generate a plurality of multi-carrier symbols using an increasing or decreasing code rate along a time dimension.

6. Apparatus (100) according to one of the preceding claims, wherein at least one multi-carrier symbol (s1, s2, MC1, MC2, MC3) comprises a plurality of subcarriers, wherein said plurality of subcarriers is preferably contiguous along a frequency dimension (f).

7. Apparatus (100) according to claim 6, wherein said apparatus (100) is further configured to generate at least one multi-carrier symbol (MC3), wherein data associated with a first group (scg1) of, preferably adjacent, subcarriers is coded by using a third code rate, and wherein data associated with a second group (scg2) of, preferably adjacent, subcarriers is coded by using a fourth code rate, wherein said fourth code rate is different from said third code rate.

8. Apparatus (100) according to one of the preceding claims, wherein said data is user data.

9. Apparatus (100) according to one of the preceding claims, wherein said apparatus (100) is configured to generate a first multi-carrier symbol (MC1) and a subsequent second multi-carrier symbol (MC2) such that the first and second multi-carrier symbols (MC1, MC2) partially overlap along a time coordinate (t).

10. Apparatus (100) according to claim 9, wherein said apparatus (100) is configured to generate said first and second multi-carrier symbols (MC1, MC2) such that an overlapping range in which said first and second multi-carrier symbols (MC1, MC2) overlap is about fifty percent of a symbol duration of said first and second multi-carrier symbols (MC1, MC2).

11. Method for providing a multi-carrier modulated signal (S), wherein a plurality of multi-carrier symbols are generated, wherein a first group (sg1) of subsequent multi-carrier symbols (s1, s2, s3) is generated, wherein data associated with said first group (sg1) of subsequent multi-carrier symbols (s1, s2, s3) is coded by using a first code rate, and wherein a second group (sg2) of subsequent multi-carrier symbols (s4, s5, s6, s7) is generated, wherein data associated with said second group (sg2) of subsequent multi-carrier symbols (s4, s5, s6, s7) is coded by using a second code rate which is different from said first code rate.

12. Method according to claim 11, wherein said data is user data.

13. Method according to one of the claims 11 to 12, wherein a first multi-carrier symbol (MC1) and a subsequent second multi-carrier symbol (MC2) are generated such that the first and second multi-carrier symbols (MC1, MC2) partially overlap along a time coordinate (t).

14. Method according to one of the claims 11 to 13, wherein a plurality of multi-carrier symbols are generated using an increasing or decreasing code rate along a time dimension.

15. Apparatus for decoding a multi-carrier modulated signal (S), preferably a multi-carrier modulated signal (S) as obtained from an apparatus (100) according to one of the claims 1 to 10, wherein said apparatus for decoding is configured to decode a first group (sg1) of subsequent multi-carrier symbols (s1, s2, s3), wherein data associated with said first group (sg1) of subsequent multi-carrier symbols (s1, s2, s3) is coded by using a first code rate, and to decode a second group (sg2) of subsequent multi-carrier symbols (s4, s5, s6, s7), wherein data associated with said second group (sg2) of subsequent multi-carrier symbols (s4, s5, s6, s7) is coded by using a second code rate which is different from said first code rate.
